# NEUE EUROPÄISCHE PATENTSCHRIFT

(11) **EP 1 032 791 B2**
(45) Veröffentlichungstag und Bekanntmachung des Hinweises auf die Entscheidung über den Einspruch: **23.01.2008**
(45) Hinweis auf die Patenterteilung: 07.08.2002
(21) Anmeldenummer: 98962217.0
(22) Anmeldetag: 06.11.1998
(51) Int. Cl.: F23R 3/00

(54) **BRENNKAMMER ZUR DAMPFKÜHLUNG EINER BRENNKAMMER**
COMBUSTION CHAMBER FOR COOLING A COMBUSTION CHAMBER WITH VAPOUR
CHAMBRE DE COMBUSTION DE REFROIDISSEMENT PAR VAPEUR D'UNE CHAMBRE DE COMBUSTION

(30) Priorität: 19.11.1997 DE 19751299
(43) Veröffentlichungstag der Anmeldung: 06.09.2000
(73) Patentinhaber: SIEMENS AKTIENGESELLSCHAFT, 80333 München (DE)
(72) Erfinder: LIEBE, Roland, D-40789 Monheim (DE)
(86) Internationale Anmeldenummer: PCT/DE1998/003248
(87) Internationale Veröffentlichungsnummer: WO 1999/027304

(56) Entgegenhaltungen:
- EP-A- 0 344 877
- EP-A- 0 543 627
- EP-A- 0 589 520
- EP-A- 0 684 369
- JP-A- 9 209 778
- US-A- 4 446 693
- US-A- 5 363 654
- US-A- 5 388 412
- US-A- 5 391 052
- US-A- 5 467 815
- US-A- 5 480 281
- US-A- 5 581 994

## Beschreibung

Die Erfindung betrifft eine Brennkammer, die eine einen Innenraum umschließende Wandstruktur mit einer Einlaßöffnung und einer Auslaßöffnung aufweist, wobei die Wandstruktur eine Innenwand aufweist, die von einer Außenwand so umschlossen ist, daß zwischen Außen- und Innenwand ein Zwischenraum gebildet ist, welcher einen Einlaß und einen Auslaß für Kühlfluid, insbesondere Kühldampf aufweist.

In der US-PS 5,083,422 ist eine Gasturbine für ein Flugzeugtriebwerk beschrieben. Diese Gasturbine weist eine Brennkammer auf mit einem von einer Innenwand umgebenen zur Führung von Heißgas vorgesehenen Innenraum, der sich an einen Brenner anschließt. Die Innenwand ist unmittelbar angrenzend an den Brenner unperforiert, also luftundurchlässig ausgeführt. In diesem Bereich ist die Innenwand von einem Mantel umgeben, welcher drei Reihen von Löchern zur Einströmung von Kühlfluid aufweist. Über einen Kompressor wird verdichtete Luft zum größten Teil dem Brenner und nur zu einem geringen Teil als Kühlfluid der dem Innenraum abgewandten Seite der Innenwand zugeführt. Ein Teil dieser Kühlluft tritt durch die Löcher in dem Mantel hindurch, wodurch eine Mehrzahl von Kühlluftstrahlen gebildet werden, die auf die Innenwand auftreffen. Die durch die Löcher in dem Mantel eintretende Kühlluft wird über eine Öffnung unmittelbar in den Innenraum hineingeführt, so daß die nunmehr erwärmte Kühlluft sich mit dem in dem Innenraum strömenden Heißgas vermischen kann.

Aus der US-PS 4,550,562 ist eine Verwendung von Kühldampf zur Kühlung von Gasturbinenteilen, insbesondere des Verdichtergehäuses, bekannt. Hierin ist eine Brennkammer dargestellt, die eine kombinierte Luft- und Dampfkühlung aufweist. Hierzu weist sie einen offenen Luftkühlkreislauf auf, beim dem Kühlluft die Brennkammer umströmt und einem in der Brennkammer strömenden Heißgas zugeführt wird. Der Kühldampf wird in einem geschlossenen Dampfkreislauf durch ein Rohr geleitet, welches solenoidartig oder spiralförmig gewunden ist. Dieses Rohr formt die Brennkammer-Innenwand.

Eine zur konvektiven Kühlung mit Kühldampf ausgelegte Brennkammer einer Gasturbine ist in der US-PS 4,819,438 dargestellt, wobei die Brennkammer eine einen Innenraum umschließende Wandstruktur aufweist. Im Innenraum wird ein Heißgas geführt. Die Wandstruktur weist eine dem Heißgas ausgesetzte Innenwand auf, die von einer Außenwand so umschlossen ist, daß zwischen Außen- und Innenwand ein Zwischenraum gebildet ist, welcher einen Einlaß und einen Auslaß für Kühldampf aufweist. Darüber hinaus sind bei der Brennkammer im Zwischenraum spiralförmige Pfade gebildet, durch die über den Einlaß in den Zwischenraum strömender Kühldampf geführt und am Auslaß abgeführt wird.

Aus der US 5,363,654 ist eine Gasturbine bekannt, deren Brennkammer für eine Prallkühlung ausgelegt ist, die auch mit Dampf erfolgen kann. Die Kühlmittelführung erfolgt dabei nach dem Oberbegriff des Patentanspruchs 1.

Aufgabe der Erfindung ist es, eine Brennkammer mit einer mit Kühldampf kühlbaren Wandstruktur anzugeben.

Erfindungsgemäß wird die auf eine Brennkammer gerichtete Aufgabe durch eine Brennkammer nach dem Oberbegriff des Patentanspruchs 1 gelöst, wobei der Außenkühiraum eine im wesentlichen senkrecht zur Außenströmungsrichtung stehende, ortsveränderliche Außenquerschnittsfläche aufweist, welche in einem weitgehend konstanten ersten Verhältnis zur Summe aller Öffnungsflächen der Öffnungen steht, die sich stromab der Außenquerschnittsfläche in der Zwischenwand befinden, und der Innenkühlraum eine im wesentlichen senkrecht zur Innenströmungsrichtung stehende, ortsveränderliche Innenquerschnittsfläche aufweist, welche in einem weitgehend konstanten zweiten Verhältnis zur Summe aller Öffnungsflächen der Öffnungen steht, die sich stromauf der Innenquerschnittsfläche in der Zwischenwand befinden. Bevorzugtermaßen sind erstes und zweites Verhältnis nahezu gleich und liegen insbesondere bei 0,08.

Durch den Einlaß kann Kühlfluid, insbesondere Kühldampf, in den Außenkühlraum strömen und durch die Öffnungen in der Zwischenwand, welche Öffnungen insbesondere für eine Prallkühlung ausgestaltet sind, in den Innenkühlraum übertreten, wobei der Kühldampf gegen die zum Innenkühlraum gewandte Seite der Innenwand prallt und somit eine Prallkühlung der Innenwand bewirkt. Der in den Innenkühlraum übergetretene Kühldampf wird über den Auslaß aus dem Innenkühlraum abgeführt. Der Kühldampf kann in einem geschlossenen Kreislauf geführt werden, derart, daß zumindest kein Kühldampf in den Innenraum eintritt und sich dort mit dem Heißgas vermischt. Vorzugsweise ist die Innenwand hierfür dampfundurchlässig ausgeführt.

Vorteilhaft ist hierbei, daß zusätzlich zu einer vorhandenen konvektiven Kühlung, bei der ein Wärmeaustausch zwischen der Innenwand und einem vorbeiströmenden Kühlfluid stattfindet, die Innenwand mit einer Prallkühlung gekühlt wird, die besonders hohe Kühleffektivität gewährleistet. Gegenüber einer Verwendung von Luft als Kühlfluid bietet die Verwendung von Kühldampf mehrere Vorteile: Kühldampf weist gegenüber Luft eine höhere Wärmekapazität auf und bietet somit eine höhere Kühleffektivität. Dadurch ist die aus der Innenwand zur Kühlung notwendigerweise abzuführenden Wärmemenge geringer und gleichzeitig kann die Innenwand auf einer niedrigeren Temperatur, die z. B. 200 °C niedriger sein kann, als bei einer Kühlung mit Luft, gehalten werden. Aufgrund der effektiveren Kühlung ist zum einen ein Heißgas mit einer höheren Temperatur mit der Wandstruktur führ- und umschließbar, ohne daß es zu einem Versagen der Wandstruktur kommt. Zum anderen bewirken die konstruktive Ausführung und das effektivere Kühlverfahren nur eine geringe Abkühlung des durch die Brennkammer strömenden Heißgases, insbesondere dadurch, daß keine Vermischung von Kühldampf und Heißgas stattfindet. Daher kann bei einer gleichbleibenden Temperatur des Heißgases an der Auslaßöffnung der Brennkammer, der Turbinen-Eintrittstemperatur, die Temperatur einer sich bei einer Verbrennung ausbildenden Flamme geringer sein kann, was sich vermindernd auf die Menge der sich bei der Verbrennung bildenden NOx-Verbindungen auswirkt. Weiterhin von Vorteil beim Einsatz von Kühldampf als Kühlfluid ist, daß keine Verdichterluft zur Kühlung der Brennkammer verwendet werden muß, so daß die eingesparte Verdichterluft einer Verbrennung zugeführt und/oder zur Kühlung anderer Teile verwendet werden kann. Bei einem geschlossenen Dampfkühlkreislauf geht weiterhin kein Kühldampf aus dem Kreislauf verloren und der Druck sowie die Temperatur, mit denen der Kühldampf über den Einlaß in den Außenkühlraum tritt, können jeweils beliebig eingestellt werden. Weiterhin kann die vom Kühldampf aufgenommene Wärme in weiteren Prozeßschritten verarbeitet werden.

Untersuchungen haben ergeben, daß bei einer konstanten und homogenen Geschwindigkeitsverteilung eines Kühlfluids, insbesondere Kühldampfs, welches entlang einer zu kühlenden Innenwand strömt, Wärme aus der Innenwand mit einer sehr hohen Wärmestromdichte in das Kühlfluid übertragen und abgeführt werden kann. Bevorzugt ist die Wandstruktur so ausgestaltet, daß sowohl im Außenkühlraum in einer Außenströmungsrichtung, als auch im Innenkühlraum in einer Innenströmungsrichtung, Kühldampf jeweils mit weitgehend konstanter und homogener Geschwindigkeitsverteilung geführt wird. Dadurch ist die sich im Außenkühlraum und im Innenkühlraum jeweils ausbildende Geschwindigkeitsverteilung des Kühldampfs im wesentlichen homogen und konstant. Hierdurch kann Wärme aus der Innenwand mit einer hohen Wärmestromdichte zwischen 500 kW/m² und 900 kW/m² in den Kühldampf übertragen und abgeführt werden. Weiterhin ist somit eine Wärmestromdichte-Verteilung der aus der Innenwand in den Kühldampf übertretenden Wärme entlang der Innenwand weitgehend homogen. Dies führt zu einer nahezu homogenen Temperaturverteilung in der Innenwand, wodurch eine geringe thermomechanische Belastung der Innenwand und hohe Kühleffektivität gewährleistet sind. Weiterhin ist der Druckunterschied zwischen dem über den Einlaß eintretenden Kühldampf und dem aus dem Auslaß austretenden Kühldampf sehr gering, was gleichbedeutend mit einem geringen Dampfströmungsdruckverlust ist.

Vorzugsweise ist der Auslaß im Bereich der Einlaßöffnung der Brennkammer angeordnet. Bei dieser Ausführung wird der in den Innenkühlraum übergetretene Kühldampf in Gegenstromrichtung zu einem sich im Innenraum befindlichen Heißgas, welches in Richtung Auslaßöffnung strömt, abgeführt. Vorteilhaft bei dieser Ausführung ist, daß der zwischen dem im Innenkühlraum geführten Kühldampf und dem im Innenraum geführten Heißgas vorhandene Temperaturunterschied entlang der Innenwand nahezu gleich bleibt, was zu einer höheren Kühleffektivität führt.

Bevorzugtermaßen sind/ist die Innenwand und/oder die Zwischenwand an der Außenwand mit einer elastischen Befestigung gehaltert, so daß sie wärmebeweglich sind, um thermomechanische Deformationen zur Vermeidung von unzulässigen Belastungen der Innenwand und/oder der Zwischenwand insbesondere nachgiebig aufzunehmen. Die Befestigung weist bevorzugtermaßen einen insbesondere gefederten Bolzen auf, der durch eine Durchführungsöffnung in der Außenwand dampfdicht geführt ist, wobei der Bolzen an der Innenwand starr befestigt und an der Außenwand elastisch gehaltert ist.

Vorzugsweise weist die Innenwand, welche bevorzugt dampfdicht und dünnwandig ausgeführt ist, eine Innenwanddicke auf, die zwischen 4,0 mm und 8,0 mm liegt.

Nach einer weiter bevorzugten Ausführungsform sind/ist die Innenwand und/oder die Zwischenwand im Bereich der Einlaßöffnung zur Aufnahme von thermomechanischen Deformationen gebogen gestaltet. Die Deformation der Innenwand und/oder der Zwischenwand wird im Bereich der Einlaßöffnung aufgenommen, womit eine unzulässige Belastung der Innenwand und/oder der Zwischenwand vermieden wird.

Nach einer weiteren bevorzugten Ausführungsform weist die Wandstruktur einen die Auslaßöffnung umgebenden Hohlraum auf, der strömungstechnisch mit dem Außenkühlraum und Innenkühlraum verbunden ist, so daß bei einem Einsatz der Brennkammer in einer Gasturbine ein Teil des in den Außenkühlraum tretenden Kühldampfs in den Hohlraum tritt und aus dem Hohlraum in den Innenkühlraum abgeführt wird. Hierdurch wird zusätzlich eine Kühlung der Wandstruktur im Bereich der Auslaßöffnung ermöglicht.

Nach einer weiteren Ausführungsform ist bevorzugtermaßen in der Wandstruktur im Bereich der Einlaßöffnung der Brennkammer ein die Einlaßöffnung umgebender weiterer Hohlraum vorgesehen, der strömungstechnisch mit dem Innenkühlraum verbunden ist und einen Hohlraumauslaß für Kühlfluid aufweist. Zur Kühlung der Wandstruktur im Bereich der Einlaßöffnung wird der in den Innenkühlraum übergetretene Kühldampf in den weiteren Hohlraum geführt und über den Hohlraumauslaß aus dem weiteren Hohlraum abgeführt.

Vorzugsweise weist die dem Innenraum zugewandte Seite der Innenwand eine Wärmedämmschicht auf, die einen Strahlungsschutz der Innenwand gegenüber Wärmestrahlung bietet, welche Wärmestrahlung von sich auf einer hohen Temperatur befindlichen Heißgas abgegeben wird. Ist die Innenwand aus Metall ausgeführt, so kann es aufgrund der hohen Temperatur zur Oxidation des Metalls an der dem Innenraum zugewandten Seite der Innenwand kommen. Aufgrund der effektiven Kühlung wird eine Oxidation der metallischen Innenwand zumindest deutlich verringert, so daß auf eine Diffusions- oder Anschlußschicht zur Aufbringung der Wärmedämmschicht verzichtet werden kann. Die Wärmedämmschicht kann somit mit Hilfe eines einfachen Beschichtungsverfahrens, insbesondere atmosphärisch, aufgetragen werden. Auf diese Weise kann die metallische Innenwand hoher Wärmestrahlung und extremen heißgasseitigen Wärmeübergangszahlen von 700 W/(m²K) bis 1200 W/(m₂K) standhalten.

In einer weiter bevorzugten Ausgestaltung sind/ist im Innenund/oder Außenkühlraum serpentinenartige Führungen gestaltet, so daß der durch den Einlaß in den Außenkühlraum tretende Kühldampf im Außenkühlraum serpentinenartig geführt wird und im Innenkühlraum serpentinenartig zum Auslaß abgeführt wird. Die serpentinenartige Führung des Kühldampfes bewirkt neben einer verbesserten Verteilung des Kühldampfes einen verbesserten Wärmeaustausch zwischen Innenwand und Kühldampf mit einer damit verbundenen besseren Kühlung der Innenwand.

Weiter bevorzugt ist die Brennkammer als eine Ringbrennkammer für eine Gasturbine ausgeführt. Die Wandstruktur der als Ringbrennkammer für eine Gasturbine ausgestaltete Brennkammer weist eine eine Turbinenachse umschließende Innenschale und mehrere die Innenschale gemeinsam umschließende Außenschalenteile auf. Hierdurch ist die Ringbrennkammer einfach zu montieren.

Bevorzugtermaßen weist die Wandstruktur der Außenschalenteile flanschartige Anschlußbereiche (Teilfugenflansche) auf, an denen die Außenschalenteile miteinander befestigt sind und an denen die Innenwand und/oder die Zwischenwand zur insbesondere nachgiebigen Aufnahme von thermomechanischen Deformationen gebogen gestaltet sind/ist.

Vorzugsweise eignet sich eine solche Brennkammer für den Einsatz als Brennkammer in einer Gasturbinenanlage, insbesondere in einer Gasturbine in der Temperaturen von deutlich über 1200°C des durch die Brennkammer geführten Heißgases auftreten. Bei einer Temperatur des Heißgases, die eine unzulässige Belastung des Grundmaterials, insbesondere einer metallischen Innenwand, bildet, führt eine Prallkühlung mit Kühldampf der dem Heißgas abgewandten Seite der Innenwand zu einem Wärmeaustausch mit dem Kühldampf, wodurch die Innenwand auf ein hinreichend niedriges Temperaturniveau, insbesondere unterhalb vom 850°C gekühlt wird.

Anhand der in der Zeichnung dargestellten Ausführungsbeispiele wird die Brennkammer näher erläutert. Es zeigen schematisiert und teilweise nicht maßstäblich unter Darstellung der für die Erläuterung verwendeten konstruktiven und funktionellen Merkmale:
- FIG 1: eine Brennkammer einer Gasturbine in einem Längsschnitt,
- FIG 2: eine Modelldarstellung der Wandstruktur, mit Kühlfluid-Strömung im Außen- und Innenkühlraum
- FIG 3: eine vergrößerte Darstellung eines Ausschnitts der Wandstruktur gemäß FIG 1,
- FIG 4: eine weitere Ausführung einer Brennkammer einer Gasturbine,
- FIG 5: eine Draufsicht auf eine abgewickelte Schnittebene durch die Wandstruktur der in FIG 3 gezeigten Brennkammer,
- FIG 6: eine Seitenansicht einer Ringbrennkammer einer Gasturbine und
- FIG 7: einen Schnitt durch einen Teil der Wandstruktur der Ringbrennkammer gemäß FIG 6.

Die Bezugszeichen sämtlicher Figuren haben jeweils die gleiche Bedeutung.

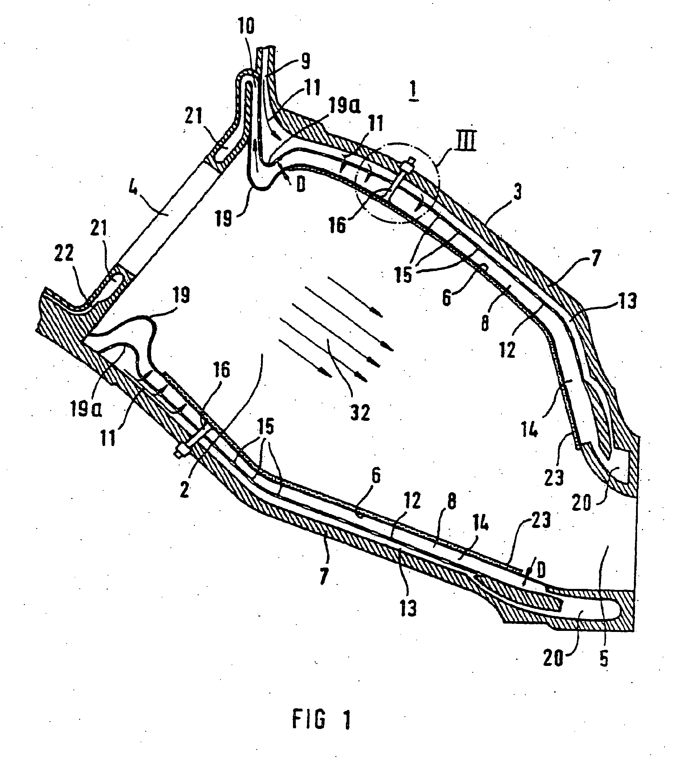

In FIG 1 ist eine Brennkammer 1 einer nicht näher dargestellten Gasturbine dargestellt. Die Brennkammer 1 weist eine Wandstruktur 3 auf, die eine Einlaßöffnung 4 und eine Ausiaßöffnung 5 für Heißgas 32 aufweist und einen Innenraum 2 zur Führung des Heißgases 32 umgibt. Die Wandstruktur 3 weist eine Innenwand 6 auf, die umschlossen wird von einer Außenwand 7. Zwischen Außenwand 7 und Innenwand 6 befindet sich ein Zwischenraum 8. In dem Zwischenraum 8 ist eine Zwischenwand 12 angeordnet, die den Zwischenraum 8 in einen Außenkühlraum 13 und einen Innenkühlraum 14 teilt. Die Zwischenwand 12 weist Öffnungen 15 auf. Ein Einlaß 9 für Kühlfluid 11 mündet in den Außenkühlraum 13 und ein Auslaß 10 für Kühlfluid 11 mündet in den Innenkühlraum 14. Der Auslaß 10 und der Einlaß 9 sind im Bereich der Einlaßöffnung 4 der Brennkammer 1 angeordnet.

Die Innenwand 6 und die Zwischenwand 12 sind mit Hilfe von Befestigungen 16 an der Außenwand 7 elastisch gehaltert. Der Anschaulichkeit halber sind lediglich zwei Befestigungen 16 in FIG 1 dargestellt. Weiterhin weisen die Innenwand 6 und die Zwischenwand 12 im Bereich der Einlaßöffnung 4 gebogen gestaltete Bereiche 19 und 19a zur Aufnahme von thermomechanischen Deformationen auf. Die Innenwand 6 weist eine Dicke D zwischen 4,0 mm und 8,0 mm und weiterhin dem Innenraum 2 zugewandt eine Wärmedämmschicht 23 auf. An der Auslaßöffnung 5 der Brennkammer 1 weist die Wandstruktur 3 einen Hohlraum 20 auf, der die Auslaßöffnung 5 umgibt. Der Hohlraum 20 ist strömungstechnisch mit dem Außenkühlraum 13 und dem Innenkühlraum 14 verbunden. An der Einlaßöffnung 4 weist die Wandstruktur 3 einen weiteren Hohlraum 21 auf, der die Einlaßöffnung 4 umgibt. Der weitere Hohlraum 21 ist strömungstechnisch mit dem Innenkühlraum 14 verbunden und weist einen Hohlraumauslaß 22 für Kühlfluid 11 auf.

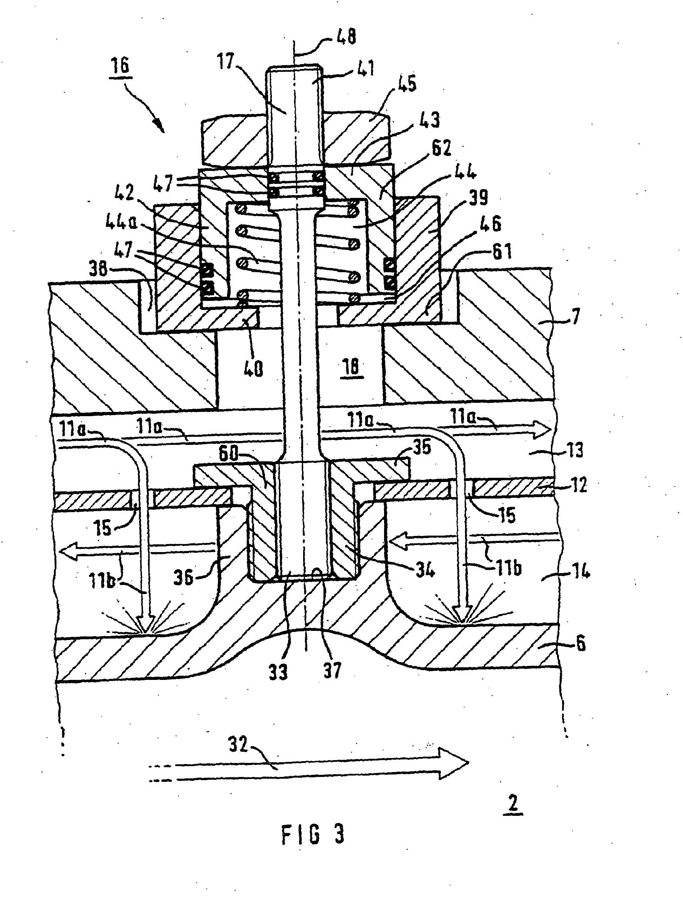

Während eines Betriebes der Brennkammer 1 unter Last wird die Innenwand 6 gekühlt. Dazu strömt über den Einlaß 9 Kühldampf 11 in den Außenkühlraum 13 und tritt durch die Öffnungen 15 in den Innenkühlraum 14 über, wobei der Kühldampf 11 gegen die Innenwand 6 prallt. Über den Auslaß 10 wird der in den Innenkühlraum 14 übergetretene Kühldampf 11 abgeführt. Dabei wird die Innenwand 6 durch Abgabe von Wärme an den vorbeiströmenden Kühldampf 11 konvektiv gekühlt. Durch das Aufprallen des Kühldampfes 11 gegen die Innenwand 6 wird eine zusätzliche Prallkühlung der Innenwand 6 erreicht. Die Anordnung des Einlasses 9 und des Auslasses 10 im Bereich der Einlaßöffnung 4 hat hierbei zur Folge, das der in den Innenkühlraum 14 übergetretene, erwärmte Kühldampf 11b (siehe FIG 3) im Gegenstrom zu dem im Innenraum 2 in Richtung zur Auslaßöffnung 5 strömenden Heißgas 32 und im Gegenstrom zu dem im Außenkühlraum 13 geführten, kalten Kühldampf 11a (siehe FIG 3) strömt. Ein Vorteil dieser Kühldampfführung liegt darin, daß der Temperaturunterschied zwischen erwärmtem Kühldampf 11b (siehe FIG 3) und dem Heißgas 32 entlang der Innenwand 6 geringe Unterschiede aufweist, was zu einer geringeren thermomechanischen Belastung der Innenwand 6 führt. Die Innenwand 6 wird dabei gleichmäßig und effektiv gekühlt.

Weiterhin wird ein Teil des in den Außenkühlraum 13 tretenden Kühldampfes 11a (siehe FIG 3) in Hohlraum 20 geleitet, wodurch die Wandstruktur 3 im Bereich der Auslaßöffnung 5 gekühlt wird. Aus dem Hohlraum 20 wird der Teil des kalten Kühldampfes 11a in den Innenkühlraum 14 abgeführt. Der im Innenkühlraum 14 geführte erwärmte Kühldampf 11b (siehe FIG 3) wird in den weiteren Hohlraum 21 geleitet. Dadurch wird die Wandstruktur 3 im Bereich der Einlaßöffnung 4 gekühlt. Aus dem weiteren Hohlraum 21 wird der erwärmte Kühldampf 11b über den Hohlraumauslaß 22 abgeführt. Dadurch, daß der Hohlraum 20 und der Hohlraum 21 jeweils Bestandteil der Wandstruktur 3 sind, wird der Kühldampf 11, 11a, 11b durch die Wandstruktur so geführt, daß geringe Reibungsverluste und somit geringe Dampfströmungsdruckverluste auftreten.

Die gebogen gestalteten Bereiche 19 und 19a der Innenwand 6 und der Zwischenwand 12 dienen zur nachgiebigen Aufnahme von thermomechanischen Deformationen, wodurch eine unzulässige Belastung der Innenwand 6 und der Zwischenwand 12 vermieden wird.

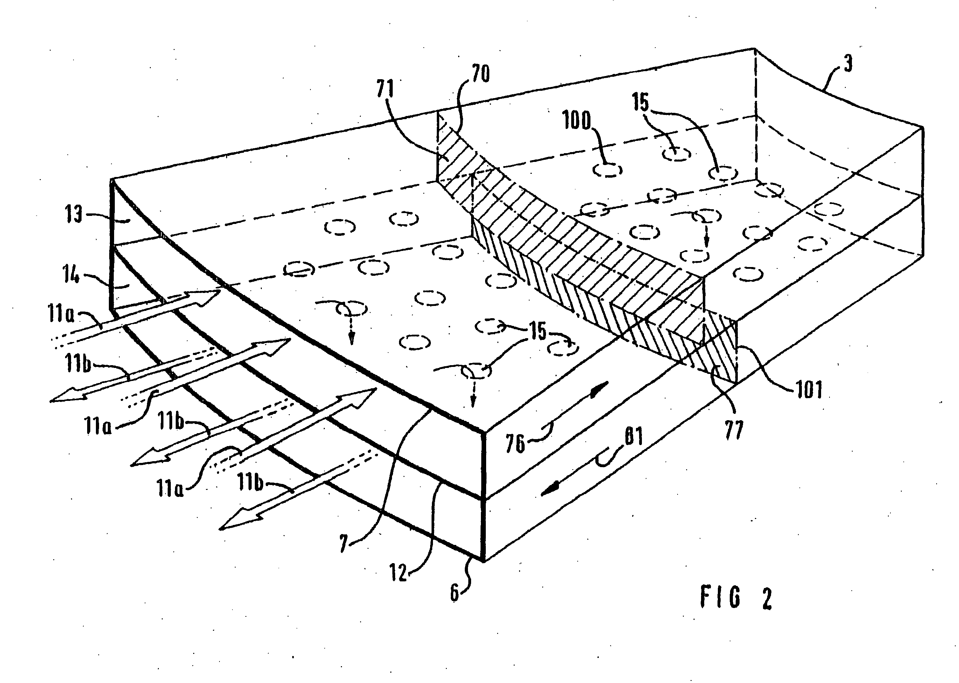

In FIG 2 ist eine schematische Darstellung der Wandstruktur 3 gezeigt. Zwischen dem Außenkühlraum 13 und dem Innenkühlraum 14 befindet sich die Zwischenwand 12, in der gleichmäßig verteilt Öffnungen 15 zur Prallkühlung angebracht sind, von denen zur besseren Anschaulichkeit nur einige gezeigt sind. Im Außenkühlraum 13 strömt kalter Kühldampf 11a mit einer Außenströmungsrichtung 76. Durch die Öffnungen 15 tritt der kalte Kühldampf 11a (siehe auch FIG 3) in den Innenkühlraum 14 über und wird als erwärmter Kühldampf 11b (siehe auch FIG 3) mit einer Innenströmungsrichtung 81 abgeführt. Der Außenkühlraum 13 weist einen ortsveränderlichen Außenkühlraumquerschnitt 70 mit einer Außenquerschnittsfläche 71 auf, welche im wesentlichen senkrecht zur Außenströmungsrichtung 76 ist. Die Außenquerschnittsfläche 71 steht in einem weitgehend konstanten ersten Verhältnis zur Summe aller Öffnungsflächen 100 aller Öffnungen 15, die sich stromab dem Außenkühlraumquerschnitt 70 in der Zwischenwand 12 befinden. Die Außenquerschnittsfläche 71 verkleinert sich in Außenströmungsrichtung 76. Analog zur Ausgestaltung des Außenkühlraums 13 weist der Innenkühlraum 14 einen Innenkühlraumquerschnitt 101 mit einer Innenquerschnittsfläche 77 auf, im wesentlichen senkrecht zur Innenströmungsrichtung 81 ist. Die ortsveränderliche Innenquerschnittsfläche 77 steht dabei in einem weitgehend konstanten zweiten Verhältnis zur Summe aller Öffnungsflächen 100 aller Öffnungen 15, die sich stromauf des Innenkühlraumquerschnitts 101 in der Zwischenwand 12 befinden. Die Innenquerschnittsfläche 77. wächst in Innenströmungsrichtung 81 an. Der Außenkühlraum 13 und der Innenkühlraum 14 sind so ausgestaltet, daß das erste und das zweite Verhältnis nahezu gleich groß sind und bei 0,08 liegen. Hierdurch wird gewährleistet, daß der im Innenkühlraum 14 strömende erwärmte Kühldampf 11b (siehe auch FIG 3) als auch der im Außenkühlraum 13 strömende kalte Kühldampf 11a (siehe auch FIG 3), jeweils mit gleichmäßiger Geschwindigkeitsverteilung strömt. Mit Kühldampf, der in einer solchen gleichmäßigen Geschwindigkeitsverteilung strömt, kann Wärme aus der Innenwand mit einer hohen Wärmestromdichte zwischen 500 kW/m² und 900 kW/m² abgeführt werden kann, wodurch eine effektive Kühlung der Innenwand möglich ist.

In FIG 3 ist vergrößert die in FIG 1 dargestellte Befestigung 16 gezeigt. Ein Bolzen 17 ist entlang einer Hauptachse 48 durch eine Durchführungsöffnung 18 in der Außenwand 7 geführt. An dem zur Innenwand 6 weisenden Ende 33 des Bolzens 17 ist eine rohrförmige Hülse 34 mit einem ringförmigen Flansch 35 angebracht. Die Hülse 34 und das Ende 33 des Bolzens 17 kann so ausgeführt sein, daß das Ende 33 in die Hülse 34 einschraubbar ist. Weiterhin ist der ringförmige Flansch 35 an dem zum Außenkühlraum 13 weisenden Ende 60 der rohrförmigen Hülse 34 angebracht. Zum Innenkühlraum 14 weisend ist an der Innenwand 6 eine Verdickung 36 mit einer Vertiefung 37 angebracht. In der Vertiefung 37 ist die rohrförmige Hülse 34 starr befestigt, so daß die Zwischenwand 12 zwischen Verdikkung 36 und ringförmigen Flansch 35 starr gehalten ist. Die Hülse 34 und die Vertiefung 37 können dabei so ausgeführt sein, daß die Hülse 34 in die Vertiefung 37 einschraubbar ist.

Dem Außenkühlraum 13 abgewandt weist die Außenwand 7 im Bereich des Durchführungsöffnung 18 eine weitere Vertiefung 38 auf. In die weitere Vertiefung 38 ist eine weitere rohrförmige Hülse 39 eingesetzt und, insbesondere mit einer nicht näher dargestellten Schweißung, befestigt. An ihrem zum Außenkühlraum 13 weisenden Ende 61 weist die weitere rohrförmige Hülse 39 einen zur Hauptachse 48 weisenden weiteren ringförmigen Flansch 40 auf. An dem dem Innenkühlraum 14 abgewandten Ende 41 des Bolzens 17 ist eine zusätzliche rohrförmige Hülse 42 mit einem zusätzlichen ringförmigen, zur Hauptachse 48 weisenden Flansch 43 angeordnet. Der zusätzliche ringförmige Flansch 43 ist an dem dem Außenkühlraum 13 abgewandten Ende 62 der zusätzlichen rohrförmigen Hülse 42 angebracht. Der zusätzliche ringförmige Flansch 43 umschließt eng den Bolzen 17 wobei die zusätzliche rohrförmige Hülse 42 parallel zur Hauptachse 48 verschiebbar ist. Die zusätzliche rohrförmige Hülse 42 ist in die weitere rohrförmige Hülse 39 parallel zur Hauptachse 48 verschiebbar eingepaßt, wobei zwischen dem weiteren ringförmigen Flansch 40 und dem zusätzlichen ringförmigen Flansch 43 um den Bolzen 17 herum ein Federraum 44 gebildet ist.

In dem Federraum 44 ist eine spiralförmige Feder 44a um den Bolzen 17 herum eingesetzt, welche einerseits auf dem weiteren ringförmigen Flansch 40 und anderseits auf dem zusätzlichen ringförmigen Flansch 43 aufliegt. Die zusätzliche rohrförmige Hülse 42 ist an dem dem Innenkühlraum 14 abgewandten Ende 41 des Bolzens 17 mit einem Einstellelement 45 einseitig so fixiert, daß zwischen dem weiteren ringförmigen Flansch 40 und der zusätzlichen rohrförmigen Hülse 42 ein Federzwischenraum 46 verbleibt. Hierbei ist das Einstellelement 45 so ausgeführt, daß seine Position in den Richtungen der Hauptachse 38 variiert und damit die Feder gestaucht werden kann, um eine Vorspannung der Feder einzustellen. Zwischen dem zusätzlichen ringförmigen Flansch 43 und dem Bolzen 17 sowie zwischen der weiteren rohrförmigen Hülse 39 und der zusätzlichen rohrförmigen Hülse 42 sind Dampfdichtungen 47 angebracht.

Somit sind die Innenwand 6 und die Zwischenwand 12 an der Außenwand 7 elastisch befestigt und insbesondere in den Richtungen parallel zur Hauptachse 38 über eine mit dem Einstellelement 45 einstellbare Länge beweglich. Mit den Dampfdichtungen 47 wird vermieden, daß Kühldampf 11a aus dem Außenkühlraum 13 durch die Durchführungsöffnung 18 tritt.

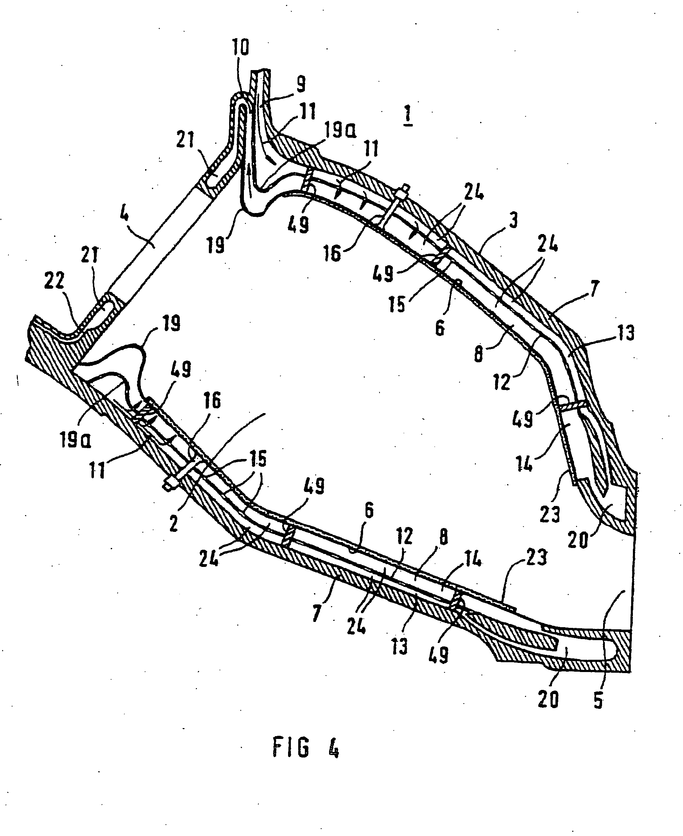

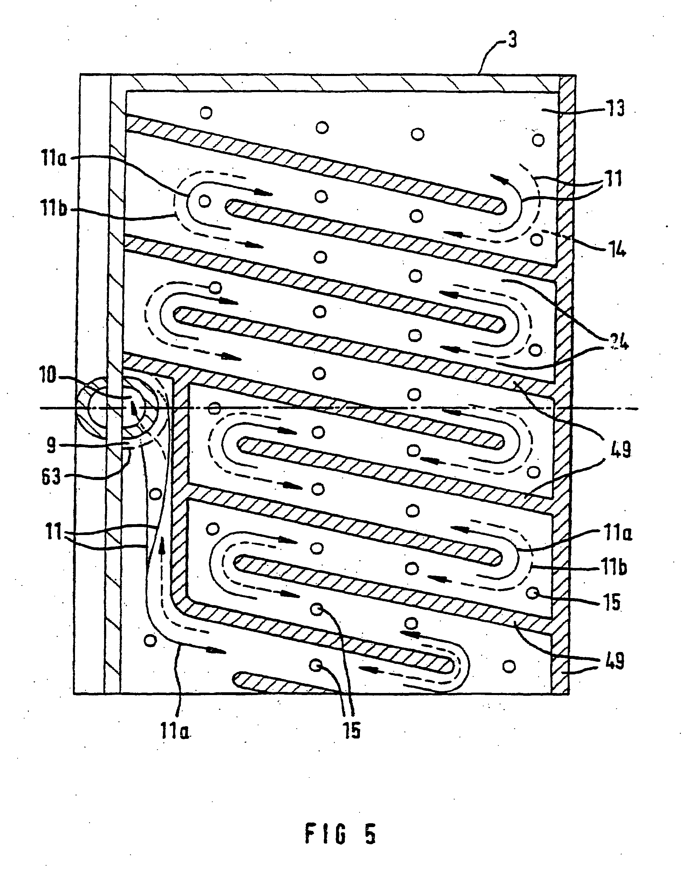

In FIG 4 ist eine Brennkammer 1 dargestellt, die im wesentlichen der schon in FIG 1 dargestellten Brennkammer entspricht. Als zusätzliche Merkmale weist sie elastische Stege 49 auf. Zur weiteren Beschreibung wird auf die FIG 1 verwiesen. Die Stege 49 sind im Außenkühlraum 13 und im Innenkühlraum 14 jeweils zwischen Außenwand 7 und Zwischenwand 12, bzw. Zwischenwand 12 und Innenwand 6 angeordnet, so daß serpentinenartige Führungen 24 gebildet sind (siehe FIG 5).

In FIG 5 ist die Schnittfläche der Abwicklung der Wandstruktur 3 mit den Stegen 49 und den Führungen 24 der in FIG 4 dargestellten Brennkammer 1 gezeigt, wobei die Schnittfläche im Außenkühlraum 13 parallel zur Außenwand 7 und Zwischenwand 12 verläuft. Durch die Anordnung der Stege 49 sind die Führungen 24 serpentinenartig ausgebildet. Kühldampf 11 gelangt zum Zweck der Kühlung der Brennkammer 1 über den Einlaß 9, der mit gestrichelten Linien 63 angedeutet ist, in den Außenkühiraum 13 und strömt entlang der serpentinenartigen Führungen 24. Dabei tritt er durch die Öffnungen 15 in den Innenkühlraum 14 über und strömt entlang der im Innenkühlraum 14 mit den Stegen 49 gebildeten Führungen 24 in Richtung Auslaß 10 und wird dort abgeführt. Der im Außenkühlraum 13 strömende kalte Kühldampf 11a (siehe FIG 3) ist mit durchgezogenen Pfeilen dargestellt, der im Innenkühlraum 14 fließende erwärmte Kühldampf 11b (siehe FIG 3) ist mit gestrichelt ausgeführten Pfeilen dargestellt. Der kalte Kühldampf 11a (siehe FIG 2) strömt in Gegenstromrichtung zum erwärmten Kühldampf 11b (siehe FIG 3). Hierdurch wird eine bessere Verteilung des Kühldampfes 11a (siehe FIG 3) erreicht und der Wärmeaustausch zwischen Innenwand 6 und Kühldampf 11b (siehe FIG 3) wird verbessert.

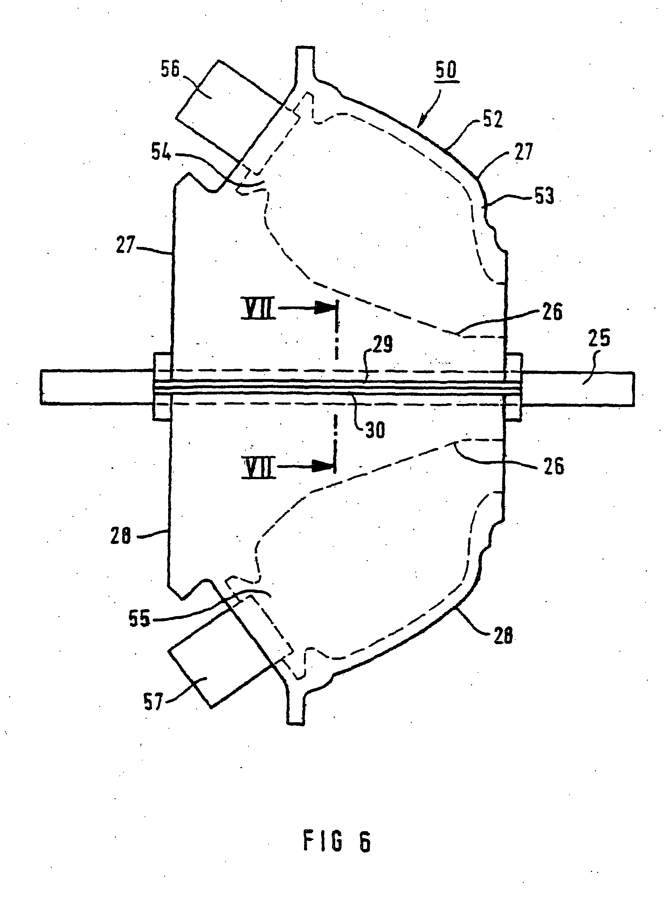

In FIG 6 ist die Seitenansicht einer als Ringbrennkammer 50 einer Gasturbine ausgeführten Brennkammer 1 dargestellt. Die Wandstruktur 52 der Ringbrennkammer 50 entspricht im Aufbau weitgehend der Wandstruktur 3 der Brennkammer 1 in FIG 1 und ist hier mehrteilig ausgeführt, wobei eine Innenschale 26 eine Turbinenachse 25 umschließt. Weiterhin weist die Wandstruktur 52 der Ringbrennkammer 50 eine in zwei Außenschalenteile 27 und 28 unterteilte Außenschale 53 auf. Die Außenschalenteile 27 und 28 weisen flanschartige Anschlußbereiche (Teilfugenflansche) 29 und 30 auf, an denen sie miteinander verbunden sind. Die Lage des Innenraums 2 der Brennkammer 1, in dem das Heißgas 32 geführt wird, ist mit den gestrichelten Linien angedeutet. Die Ringbrennkammer 50 weist an ihrem Umfang mehrere Brennkammeröffnungen mit darin eingesetzten Brennern auf, wobei zur besseren Anschaulichkeit nur zwei Brennkammeröffnungen 54 und 55 mit jeweils einem Brenner 56, bzw. 57 dargestellt sind.

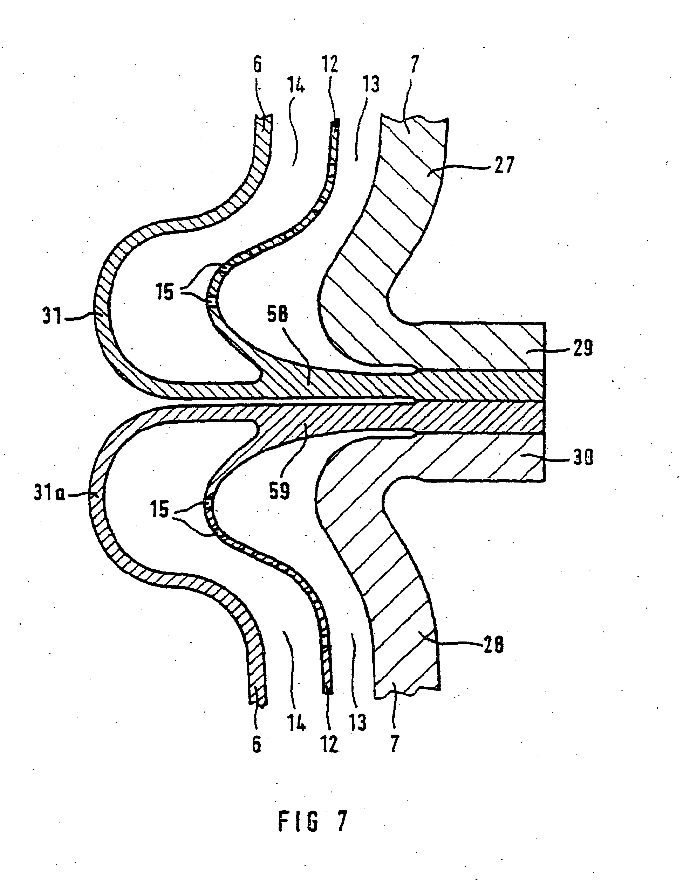

FIG 7 zeigt einen Teil aus dem in FIG 6 bezeichneten Querschnitt IV (Teilfugenschnitt) der Ringbrennkammer 50, wobei nur ein Teil der Außenschalenteile 27 und 28 im Bereich der flanschartigen Anschlußbereiche 29 und 30 dargestellt ist. Die Außenwand 7, die Innenwand 6 und die Zwischenwand 12 sind im Bereich der Anschlußbereiche 29 und 30 gebogen ausgeführt. Die Innenwand 6 und die Zwischenwand 12 gehen an den Anschlußteilen 29, bzw. 30 jeweils in eine gemeinsame Wand 58, bzw. 59 über. Die gemeinsamen Wände 58 und 59 bilden mit den Außenwänden 27 und 28 die flanschartigen Anschlußbereiche 29 und 30. Die Anschlußbereiche 29 und 30 sind miteinander, insbesondere mit nicht näher dargestellten Schraubverbindungen, befestigt. Die Innenwand weist gebogen gestaltete Bereiche 31 und 32 auf. Die gebogen gestalteten Bereiche 31 und 32 und die an den Anschlußbereichen 29 und 30 gebogen gestaltete Zwischenwand 12 sind wärmeelastisch ausgelegt, um auftretende thermomechanische Deformationen nachgiebig aufnehmen und somit eine Beschädigung durch solche Belastungen vermeiden zu können.

Ein beispielhaftes Verfahren zur Dampfkühlung der Brennkammer wird anhand der FIG 3 erläutert. In dem Außenkühlraum 13 wird kalter Kühldampf 11a geführt. Der kalte Kühldampf 11a tritt durch in der Zwischenwand 12 befindliche Öffnungen 15 in den Innenkühlraum und prallt zur Prallkühlung gegen die Innenwand 6. Dadurch wird die durch das Heißgas 32 erwärmte Innenwand 6 gekühlt.

Bei dem Verfahren wird weiterhin der durch die Prallkühlung erwärmte Kühldampf 11b entgegen einer Strömungsrichtung des zugeführten kalten Kühldampfes 11a und entgegen einer Strömungsrichtung des im Innenraum 2 geführten Heißgases 32 abgeführt. Dies wird als Gegenstromprinzip bezeichnet.

Die Erfindung zeichnet sich durch eine Brennkammer mit einer einen Innenraum umschließenden Wandstruktur mit einer Zwischenwand mit Öffnungen aus, wobei die Zwischenwand zwischen einer Außenwand und einer einem Heißgas aussetzbaren Innenwand angeordnet ist und wobei zwischen der Außenwand und der Innenwand ein Außenkühlraum und zwischen der Innenwand und der Zwischenwand ein Innenkühlraum gebildet ist. Hierbei wird eine Prallkühlung der Innenwand erzielt.

## Patentansprüche

1. Brennkammer (1), die eine einen Innenraum (2) umschließende Wandstruktur (3) mit einer Einlaßöffnung (4) und einer Auslaßöffnung (5) aufweist, wobei die Wandstruktur (3) eine Innenwand (6) aufweist, die von einer Außenwand (7) so umschlossen ist, daß zwischen Außen- (7) und Innenwand (6) ein Zwischenraum (8) gebildet ist, welcher einen Einlaß (9) und einen Auslaß (10) für Kühldampf (11) aufweist, wobei
im Zwischenraum (8) eine Zwischenwand (12) vorgesehen ist, die den Zwischenraum (8) in einen Außenkühlraum (13) zwischen der Außen- (7) und der Zwischenwand (12) sowie einen Innenkühlraum (14) zwischen der Innen- (6) und der Zwischenwand (12) teilt und Öffnungen (15) zur Durchströmung von Kühldampf (11) für eine Prallkühlung der Innenwand (6) aufweist, und daß der Einlaß (9) in den Außenkühlraum (13) und der Auslaß (10) in den Innenkühlraum (14) mündet, **dadurch gekennzeichnet, daß** der Außenkühlraum (13) eine entlang einer Außenströmungsrichtung (76) ortsveränderliche Außenquerschnittfläche (71) aufweist, die in einem weitgehend konstanten ersten Verhältnis zur Summe aller Öffnungsflächen (76) der Öffnungen (15) steht, die sich stromab der Außenquerschnittsfläche in der Zwischenwand (12) befinden, und daß der Innenkühlraum (14) eine entlang einer Innenströmungsrichtung (81) ortsveränderliche Innenquerschnittsfläche (77) aufweist, die in einem weitgehend konstanten zweiten Verhältnis zur Summe aller Öffnungsflächen (100) der Öffnungen (15) steht, die sich stromauf der Innenquerschnittsfläche (77) in der Zwischenwand (12) befinden, wobei das erste und zweite Verhältnis nahezu gleich, insbesondere gleich 0,08 sind.

2. Brennkammer (1) nach Anspruch 1,
**dadurch gekennzeichnet, daß** der Auslaß (10) und/oder der Einlaß (9) im Bereich der Einlaßöffnung (4) angeordnet sind/ist.

3. Brennkammer (1) nach Anspruch 1 oder 2,
**dadurch gekennzeichnet, daß** die Innenwand (6) und die Zwischenwand (12) an der Außenwand (7) mit einer elastischen Befestigung (16) gehaltert sind.

4. Brennkammer (1) nach Anspruch 3,
**dadurch gekennzeichnet, daß** die Befestigung (16) einen Bolzen (17) aufweist, der durch eine Durchführungsöffnung (18) in der der Außenwand (7) dampfdicht durchgeführt, an der Innenwand (6) starr befestigt und an der Außenwand (7) elastisch gehaltert ist.

5. Brennkammer (1) nach einem der vorhergehenden Ansprüche,
**dadurch gekennzeichnet, daß** die Innenwand (6) eine Innenwanddicke (D) zwischen 4,0 mm und 8,0 mm aufweist.

6. Brennkammer (1) nach einem der vorhergehenden Ansprüche,
**dadurch gekennzeichnet, daß** die Innenwand (6) und/oder die Zwischenwand (12) im Bereich (19,19a) an der Einlaßöffnung (4) zur Aufnahme von thermomechanischen Deformationen gebogen gestaltet sind/ist.

7. Brennkammer (1) nach einem der vorhergehenden Ansprüche,
**dadurch gekennzeichnet, daß** die Wandstruktur (3) einen die Auslaßöffnung (5) umgebenden Hohlraum (20) aufweist, der strömungstechnisch mit dem Außen- (13) und Innenkühlraum (14) verbunden ist.

8. Brennkammer (1) nach einem der vorhergehenden Ansprüche,
**dadurch gekennzeichnet, daß** ein die Einlaßöffnung (4) umgebender weiterer Hohlraum (21) vorgesehen ist, der strömungstechnisch mit dem Innenkühlraum (13) verbunden ist und einen Hohlraumauslaß (22) für Kühldampf (11) aufweist.

9. Brennkammer (1) nach einem der vorhergehenden Ansprüche,
**dadurch gekennzeichnet, daß** die Innenwand (6) dem Innenraum (2) zugewandt eine Wärmedämmschicht (23) aufweist.

10. Brennkammer (1) nach einem der vorhergehenden Ansprüche, die als Ringbrennkammer (50) für eine Gasturbine ausgeführt ist.

11. Brennkammer (1) nach Anspruch 10,
**dadurch gekennzeichnet, daß** die Wandstruktur (3) eine eine Turbinenachse (25) umschließende Innenschale (26) und mehrere die Innenschale (26) gemeinsam umschließende Außenschalenteile (27,28) aufweist.

12. Brennkammer (1) nach Anspruch 11,
**dadurch gekennzeichnet, daß** flanschartige Anschlußbereiche (29,30) vorgesehen sind, an denen die Außenschalenteile (27,28) miteinander verbunden sind und an denen die Innenwand (6) und/oder die Zwischenwand (12) der Außenschalenteile (27,28) zur Aufnahme von thermomechanischen Deformationen gebogen gestaltet sind/ist.

## Claims

1. Combustion chamber (1), which has a wall structure (3) enclosing an inner space (2), with an inlet orifice (4) and an outlet orifice (5), the wall structure (3) having an inner wall (6) which is enclosed by an outer wall (7) in such a way as to form, between the outer wall (7) and inner wall (6), an interspace (8) which has an inlet (9) and an outlet (10) for cooling steam (11), an intermediate wall (12) being provided in the interspace (8) which divides the interspace (8) into an outer cooling space (13) between the outer wall (7) and the intermediate wall (12) and an inner cooling space (14) between the inner wall (6) and the intermediate wall (12), and which, has orifices (15) for the throughflow of cooling steam (11) for impact cooling of the inner wall (6), and in that the inlet (9) opens into the outer cooling space (13) and the outlet (10) opens into the inner cooling space (14), **characterized in that** the outer cooling space (13) has an outer cross-sectional area (71) which is movable along an outer flow direction (76) and which is in a largely constant first ratio to the sum of all the orifice areas (76) of the orifices (15) which are located downstream of the outer cross-sectional area in the intermediate wall (12), and **in that** the inner cooling space (14) has an inner cross-sectional area (77) which is movable along an inner flow direction (81) and which is in a largely constant second ratio to the sum of all the orifice areas (100) of the orifices (15) which are located upstream of the inner cross-sectional area (77) in the intermediate wall (12), the first and second ratios being virtually identical, in particular equal to 0.08.

2. Combustion chamber (1) according to Claim 1, **characterized in that** the outlet (10) and/or the inlet (9) are/is arranged in the region of the inlet orifice (4).

3. Combustion chamber (1) according to Claim 1 or 2, **characterized in that** the inner wall (6) and the intermediate wall (12) are mounted on the outer wall (7) by means of an elastic fastening (16).

4. Combustion chamber (1) according to Claim 3, **characterized in that** the fastening (16) has a bolt (17) which is led in a steam-tight manner through a leadthrough orifice (18) in the the outer wall (7), is fastened rigidly to the inner wall (6) and is mounted elastically on the outer wall (7).

5. Combustion chamber (1) according to one of the preceding claims, **characterized in that** the inner wall (6) has an inner-wall thickness (D) of between 4.0 mm and 8.0 mm.

6. Combustion chamber (1) according to one of the preceding claims, **characterized in that** the inner wall (6) and/or the intermediate wall (12) are/is designed to be bent in the region (19, 19a) at the inlet orifice (4) for the absorption of thermomechanical deformations.

7. Combustion chamber (1) according to one of the preceding claims, **characterized in that** the wall structure (3) has a cavity (20) which surrounds the outlet orifice (5) and which is connected fluidically to the outer cooling space (13) and inner cooling space (14).

8. Combustion chamber (1) according to one of the preceding claims, **characterized in that** a further cavity (21) surrounding the inlet orifice (4) is provided, the said cavity being connected fluidically to the inner cooling space (13) and having a cavity outlet (22) for cooling steam (11).

9. Combustion chamber (1) according to one of the preceding claims, **characterized in that** the inner wall (6) has, facing the inner space (2), a heat-insulating layer (23).

10. Combustion chamber (1) according to one of the preceding claims, which is designed as an annular combustion chamber (50) for a gas turbine.

11. Combustion chamber (1) according to Claim 10, **characterized in that** the wall structure (3) has an inner shell (26) enclosing a turbine shaft (25) and a plurality of outer-shell parts (27, 28) jointly enclosing the inner shell (26).

12. Combustion chamber (1) according to Claim 11, **characterized in that** flange-like connecting regions (29, 30) are provided, at which the outer-shell parts (27, 28) are connected to one another and at which the inner wall (6) and/or the intermediate wall (12) of the outer-shell parts (27, 28) are/is designed to be bent for the absorption of thermomechanical deformations.

## Revendications

1. Chambre de combustion (1), qui présente une structure de paroi (3) entourant un espace intérieur (2) et ayant un orifice d'admission (4) et un orifice d'échappement (5), la structure de paroi (3) présentant une paroi intérieure (6) qui est entourée par une paroi extérieure (7) de façon qu'il se forme entre la paroi extérieure (7) et la paroi intérieure (6) un espace intermédiaire (8), qui comporte une entrée (9) et une sortie (10) pour de la vapeur de refroidissement (11), dans laquelle il est prévu dans l'espace intermédiaire (8) une paroi intermédiaire (12) qui partage l'espace intermédiaire (8) en un espace de refroidissement extérieur (13) entre la paroi extérieure (7) et la paroi intermédiaire (12) et en un espace de refroidissement intérieur (14) entre la paroi intérieure (6) et la paroi intermédiaire (12), et présente des ouvertures (15) pour permettre le passage de vapeur de refroidissement (11) pour effectuer un refroidissement par chocs de la paroi intérieure (6), et en ce que l'entrée (9) débouche dans l'espace de refroidissement extérieur (13) et la sortie (10) débouche dans l'espace de refroidissement intérieur (14), **caractérisée en ce que** l'espace de refroidissement extérieur (13) a une surface (71) en section transversale extérieure, dont l'aire varie en fonction du point considéré le long d'une direction d'écoulement extérieur (76), surface dont l'aire fait un premier rapport, essentiellement constant, avec la somme des aires (76) de l'ensemble des ouvertures (15) qui se trouvent dans la paroi intermédiaire (12) en aval de la surface en section transversale extérieure, et **en ce que** l'espace de refroidissement intérieur (14) présente une surface (77) en coupe transversale intérieure dont l'aire varie avec le point considéré le long de la direction de l'écoulement intérieur (81), aire qui fait un deuxième rapport essentiellement constant avec la somme des aires (100) de l'ensemble des ouvertures (15) qui se trouvent dans la paroi intermédiaire (12) en amont de la surface (17) en section transversale intérieure, le premier et le deuxième rapports étant presque égaux et en particulier égaux à 0,08.

2. Chambre de combustion (1) selon la revendication 1, **caractérisée en ce que** la sortie (10) et/ou l'entrée (9) sont disposées dans la zone de l'orifice d'admission (4) .

3. Chambre de combustion (1) selon la revendication 1 ou 2, **caractérisée en ce que** la paroi intérieure (6) et la paroi intermédiaire (12) sont maintenues contre la paroi extérieure (7) à l'aide d'une fixation élastique (16).

4. Chambre de combustion (1) selon la revendication 3, **caractérisée en ce que** la fixation (16) présente un boulon (17), qui passe d'une manière étanche à la vapeur par une traversée (18) aménagée dans la paroi extérieure (7), est fixé d'une manière rigide à la paroi intérieure (6) et est maintenu d'une manière élastique contre la paroi extérieure (7).

5. Chambre de combustion (1) selon l'une des revendications précédentes, **caractérisée en ce que** la paroi intérieure (6) a une épaisseur de paroi intérieure (D) de 4,0 à 8,0 mm.

6. Chambre de combustion (1) selon l'une des revendications précédentes, **caractérisée en ce que** la paroi intérieure (6) et/ou la paroi intermédiaire (12) ont dans la zone (19, 19a) une forme courbe au niveau de l'orifice d'admission (4), pour absorber des déformations thermomécaniques.

7. Chambre de combustion (1) selon l'une des revendications précédentes, **caractérisée en ce que** la structure de paroi (3) présente un espace creux (20), qui entoure l'orifice d'échappement (5), et qui communique conformément à la dynamique des fluides avec l'espace de refroidissement extérieur (13) et avec l'espace de refroidissement intérieur (14).

8. Chambre de combustion (1) selon l'une des revendications précédentes, **caractérisée en ce qu'**on prévoit un autre espace creux (21), qui entoure l'orifice d'admission (4), qui communique conformément à la dynamique des fluides avec l'espace de refroidissement intérieur (13) et qui présente une sortie d'espace creux (22) pour la vapeur de refroidissement (11).

9. Chambre de combustion (1) selon l'une des revendications précédentes, **caractérisée en ce que** la paroi intérieure (6) comporte, dirigée vers l'espace intérieur (2), une couche calorifuge (23).

10. Chambre de combustion (1) selon l'une des revendications précédentes, qui est configurée comme une chambre de combustion annulaire (50) pour une turbine à gaz.

11. Chambre de combustion (1) selon la revendication 10, **caractérisée en ce que** la structure de paroi (3) présente une coque intérieure (26) entourant un axe de turbine (25) et plusieurs éléments de coque extérieure (27, 28), qui ensemble entourent la coque intérieure (26).

12. Chambre de combustion (1) selon la revendication 11, **caractérisée en ce que** des zones de raccordement en forme de bride (29, 30) sont prévues, au niveau desquelles les éléments de coque extérieure (27, 28) sont reliés l'un à l'autre, et au niveau desquelles la paroi intérieure (6) et/ou la paroi intermédiaire (12) des éléments de coque extérieure (27, 28) sont configurés courbes pour absorber les déformations thermomécaniques.
